# EUROPÄISCHE PATENTANMELDUNG

(11) **EP 2 106 944 A2**
(43) Veröffentlichungstag der Anmeldung: **07.10.2009**
(21) Anmeldenummer: 09002201.3
(22) Anmeldetag: 17.02.2009
(51) Int. Cl.: B60J 7/043

(54) **Deckelelementträger**

(30) Priorität: 03.04.2008 DE 102008017074
(71) Anmelder: Webasto AG, 82131 Stockdorf (DE)
(72) Erfinder: Färber, Manfred, 82407 Wielenbach (DE)
(74) Vertreter: advotec.

(57) **Zusammenfassung**

Es wird ein öffnungsfähiges Fahrzeugdach vorgeschlagen, umfassend ein Dachöffnungssystem mit einem in seitlichen Führungsschienen geführten Deckelelement (16), mittels dessen eine Dachöffnung (14) wahlweise verschließbar oder zumindest teilweise freigebbar ist, das zwischen einer eingeschwenkten Schließstellung und einer ausgeschwenkten Lüfterstellung verschwenkbar ist, in der ein hinterer Rand des Deckelelements (16) gegenüber einem festen Dachbereich (12) nach oben ausgestellt ist, und das zur Freigabe der Dachöffnung über den heckseitig der Dachöffnung angeordneten festen Dachbereich (12) verfahrbar ist, wobei das Deckelelement (16) bezogen auf eine Fahrzeuglängsmittelebene beidseits jeweils über mindestens eine vordere und eine hintere (30) Schraubverbindung an einem sich im Wesentlichen in Fahrzeuglängsrichtung erstreckenden Träger (24) fixiert ist, der an eine Dachmechanik angebunden ist. Erfindungsgemäß sind die hinteren Schraubverbindungen (30) der Träger (24) jeweils im Wesentlichen in Fahrzeuglängsrichtung und die vorderen Schraubverbindungen der Träger (24) jeweils im Wesentlichen in Fahrzeugquerrichtung ausgerichtet.

## Beschreibung

Die Erfindung betrifft ein öffnungsfähiges Fahrzeugdach nach dem Oberbegriff des Patentanspruchs 1.

Ein derartiges Fahrzeugdach ist aus der Praxis bekannt und umfasst ein Dachöffnungssystem, welches mit einem in seitlichen Führungsschienen geführten Deckelelement versehen ist, mittels dessen eine Dachöffnung wahlweise verschließbar oder zumindest teilweise freigebbar ist und das zwischen einer eingeschwenkten Schließstellung und einer ausgeschwenkten Lüfterstellung verschwenkbar ist, in der ein hinterer Rand des Deckelelements gegenüber einem festen Dachbereich nach oben ausgestellt ist. Zur Freigabe der Dachöffnung ist das Deckelelement über den heckseitig der Dachöffnung angeordneten festen Dachbereich verfahrbar. Es handelt sich also um ein so genanntes außen laufendes Schiebedach oder um ein so genanntes Spoilerdach. Das Deckelelement ist bezogen auf eine Fahrzeuglängsmittelebene beidseits über mindestens eine vordere und eine heckseitige Schraubverbindung an einem sich im Wesentlichen in Fahrzeuglängsrichtung erstreckenden Träger fixiert, der an eine Dachmechanik angebunden ist.

Des Weiteren sind aus der Praxis Spoilerdächer bekannt, bei denen das Deckelelement zur Freigabe einer Dachöffnung über einen heckseitigen festen Dachbereich verfahren wird und das im heckseitigen Randbereich der Dachöffnung mit einem Dachrollo und einem Elektroantrieb zur Betätigung des Deckelelements versehen ist, welche in Schließstellung des Deckelelements von diesem überdeckt sind und in Öffnungsstellung des Deckelelements frei liegen.

In der Regel erfolgt eine Verschraubung eines Deckelelements mit seitlichen Trägerelementen, die mit einer Dachmechanik verbunden sind, über mindestens eine vordere und eine hintere bzw. heckseitige Verschraubung, die jeweils in Fahrzeugquerrichtung ausgerichtet sind. Eine derartige Verschraubung am heckseitigen Ende des Trägers ist bei dem vorbeschriebenen Spoilerdach vom Fahrzeuginnenraum aus nicht möglich, da der Zugang zu einem möglichen Verschraubungspunkt durch ein Trägerelement für den Elektroantrieb und eine Wickelwelle der Rolloanordnung versperrt sein kann. Wenn zusätzlich an dem Deckelelement seitliche, deckelfeste Seitenblenden zur Verblendung der Antriebsmechanik vorgesehen sind, ist auch bei in Lüfterstellung ausgestelltem Deckelelement eine Verschraubung von der Fahrzeugaußenseite nicht möglich. Ohne derartige deckelfeste Seitenblende würde die Verschraubung am heckseitigen Ende des Deckelelementträgers in Lüfterstellung des Deckelelements erfolgen können. Zur Einstellung des Deckelelements gegenüber festen Dachabschnitten ist aber eine Verschraubung in Schließstellung des Deckelelements, das heißt in dessen Nulllage, gewünscht.

Der Erfindung liegt die Aufgabe zugrunde, ein öffnungsfähiges Fahrzeugdach der einleitend genannten Gattung zu schaffen, das eine breite Variabilität hinsichtlich der Verschraubung des Deckelelements an seitlichen Trägem bietet.

Diese Aufgabe ist erfindungsgemäß durch das öffnungsfähige Fahrzeugdach mit den Merkmalen des Patentanspruchs 1 gelöst.

Erfindungsgemäß wird mithin vorgeschlagen, dass die hinteren Schraubverbindungen der Träger jeweils in Fahrzeuglängsrichtung und die vorderen Schraubverbindungen der Träger jeweils in Fahrzeugquerrichtung ausgerichtet sind.

Durch die erfindungsgemäße Ausrichtung der Schraubverbindungen ist es möglich, das Deckelelement gegenüber angrenzenden festen Dachbereichen in seiner Schließstellung einzustellen, und zwar dadurch, dass ein Schraubwerkzeug in Fahrzeuglängsrichtung an den hinteren Schraubverbindungen angesetzt wird. Es ist also eine Einstellung bzw. Montage des Deckelelements in dessen Nulllage von unten möglich.

Bei einer speziellen Ausführungsform des Fahrzeugdachs nach der Erfindung weisen die Träger jeweils an ihrem heckseitigen Ende eine Fixierlasche auf, bezüglich deren Ebene die hintere Verschraubung lotrecht ausgerichtet ist und in die die Schraube der hinteren Verschraubung eingreift. Die Träger sind insbesondere jeweils als Stanzbiegebauteile ausgebildet.

Um eine besonders stabile Fixierung des Deckelelements an den Trägem zu ermöglichen, weisen die Träger bei einer speziellen Ausführungsform des Fahrzeugdachs nach der Erfindung jeweils eine Versteifungsrippe auf, an der sich die betreffende Fixierlasche abstützt.

Um eine gute Zugänglichkeit der heckseitigen Verschraubungen zwischen den Trägern und dem Deckelelement zu ermöglichen, sind die Achsen der heckseitigen Verschraubungen zwischen dem Deckelelement und den seitlichen Trägem vorzugsweise so angeordnet, dass sie in Lüfterstellung des Deckelelements mit einem Spalt zwischen dem vorderen Rand des festen Dachabschnitts und dem hinteren Rand des Deckelelements fluchten und in Schließstellung des Deckelelements mit einem Einstellspalt zwischen einem heckseitigen Schiebedachrahmenschenkel und einem heckseitigen Querträger zur Aufnahme von Dachfunktionselementen fluchten, der in Schließstellung oder Lüfterstellung des Deckelelements von diesem zumindest weitgehend überdeckt ist.

Die erfindungsgemäße Ausbildung der Verschraubungen zwischen den Trägem und dem Deckelelement ist insbesondere bei Deckelelementen, die bezüglich einer Fahrzeuglängsmittelebene an ihren seitlichen Rändern beidseits jeweils eine deckelfeste Seitenblende aufweisen, die einzige Möglichkeit, dass eine heckseitige Verschraubung zwischen dem Deckelelement und den Trägem im eingebauten Zustand des Dachöffnungssystems mit einem Werkzeug zugänglich ist.

Durch die erfindungsgemäße Ausbildung eines Fahrzeugdachs wird eine Möglichkeit geboten, bei schon montiertem Fahrzeuginnenhimmel das Deckelelement einzustellen oder das Deckelelement zu wechseln oder im Wartungsfall nachzujustieren. Dies kann in Lüfterposition des Deckelelements ohne Demontage des Fahrzeuginnenhimmels erfolgen.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel eines öffnungsfähigen Fahrzeugdachs nach der Erfindung ist in der Zeichnung schematisch vereinfacht dargestellt und wird in der nachfolgenden Beschreibung näher erläutert. Es zeigt:
- Fig. 1: eine Seitenansicht eines Fahrzeugdaches mit einem als Spoilerdach ausgebildeten Dachöffnungssystem in Lüfterstellung eines Deckelelements;
- Fig. 2: eine Fig. 1 entsprechende Ansicht, jedoch mit in Richtung Fahrzeugheck verfahrenem Deckelelement;
- Fig. 3: einen Schnitt des Fahrzeugdachs in Fahrzeuglängsrichtung im Bereich einer hinteren Anbindung des Deckelelements an einen seitlichen Träger in Schließstellung des Deckelelements;
- Fig. 4: eine Fig. 3 entsprechende Schnittdarstellung, jedoch in Lüfterstellung des Deckelelements;

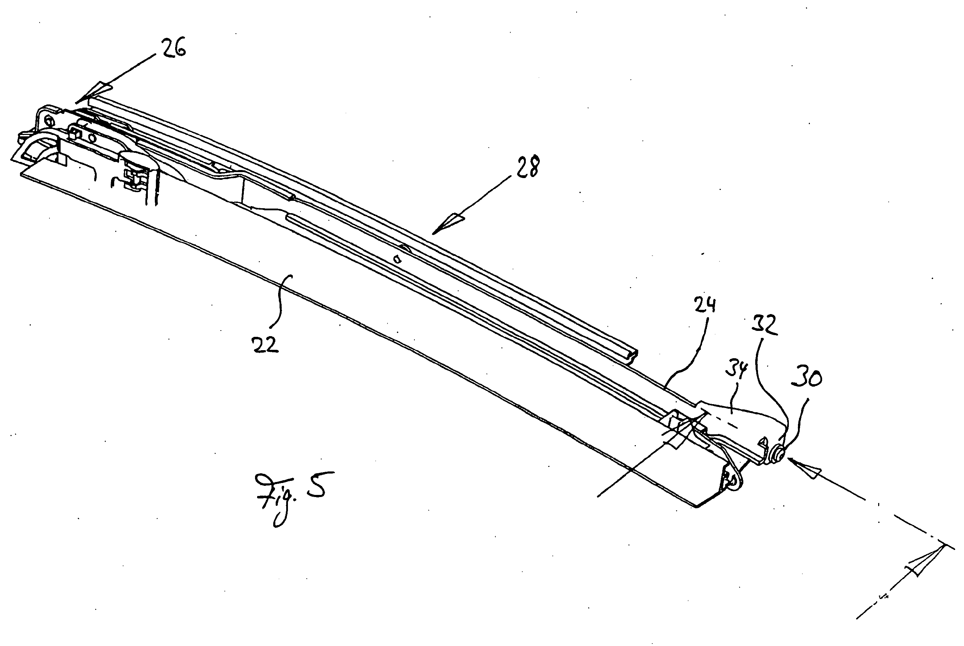

- Fig. 5: eine perspektivische Darstellung des seitlichen Trägers in Verbindung mit einer Führungsschiene zur Führung des Deckelelements;

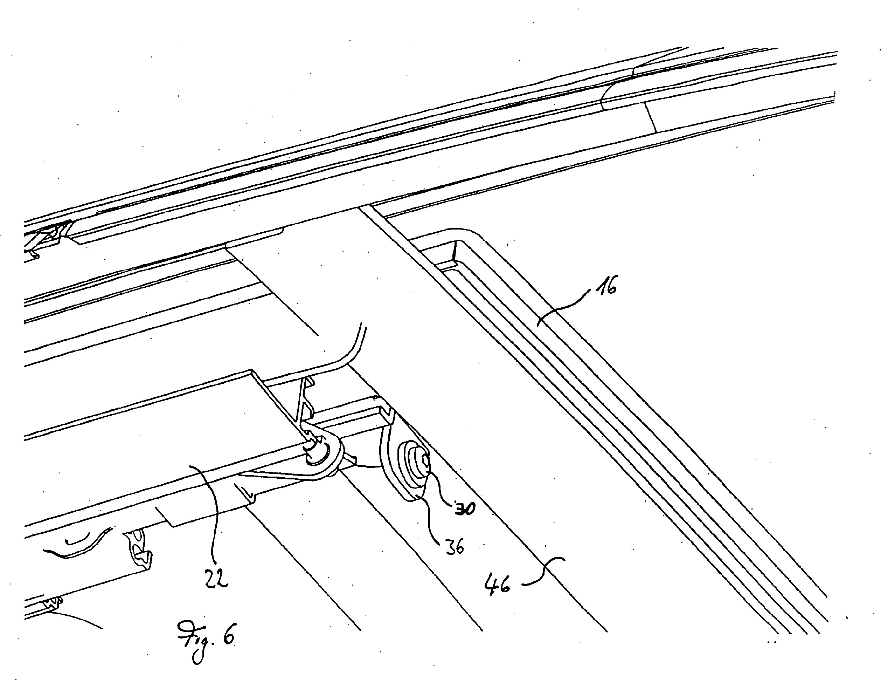

- Fig. 6: eine perspektivische Unteransicht des Fahrzeugdachs in Schließ-stellung des Deckelelements; und
- Fig. 7: eine heckseitige, perspektivische Außenansicht des Fahrzeugdachs in Lüfterstellung des Deckelelements.

In der Zeichnung ist ein Dach 10 eines Kraftfahrzeuges dargestellt, das mit einem ein Spoilerdach darstellenden Dachöffnungssystem versehen ist und einen hinteren festen Dachbereich 12 umfasst, an welchen sich vorne, das heißt in Richtung Fahrzeugbug, eine Dachöffnung anschließt, welche mittels eines Deckelelements 16 wahlweise verschlossen oder zumindest teilweise freigegeben werden kann.

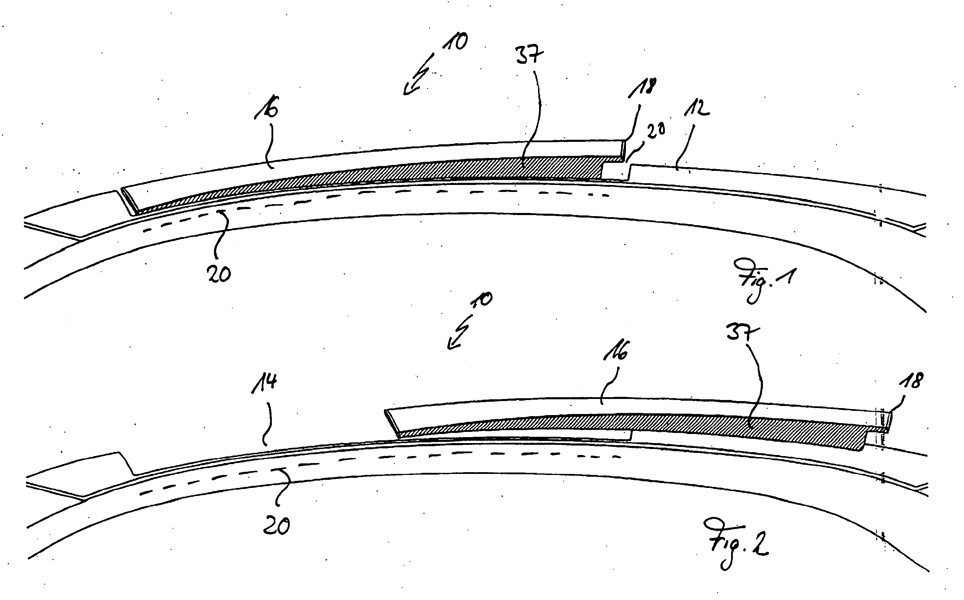

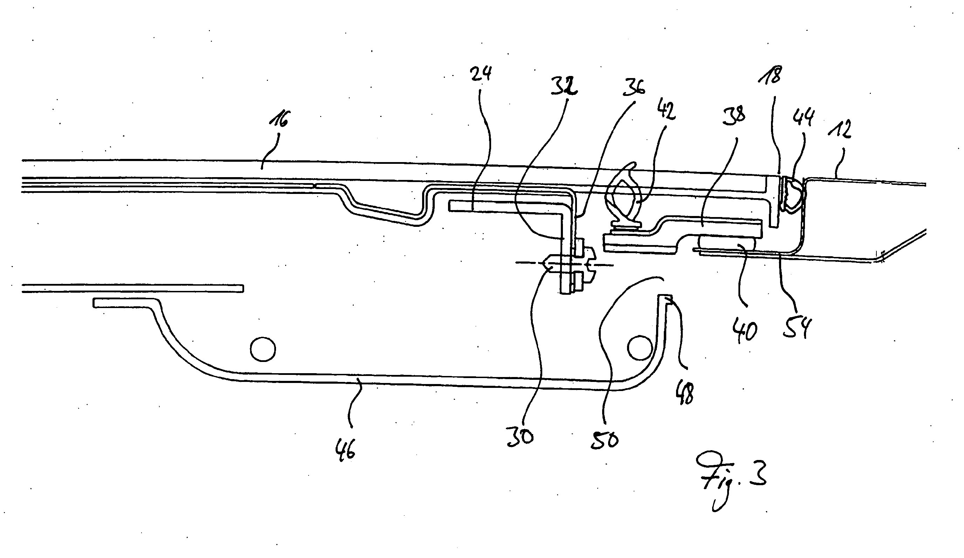

Ausgehend von einer beispielsweise in Fig. 3 dargestellten Schließstellung kann das Deckelelement 16 in eine in Fig. 1 dargestellte, ausgestellte Lüfterstellung verschwenkt werden, in der ein heckseitiger Rand des Deckelelements 16 gegenüber dem festen Dachbereich 12 nach oben ausgestellt ist, so dass sich ein Spalt 20 zwischen dem hinteren Rand 18 und dem festen Dachbereich 12 öffnet. Ausgehend von dieser Lüfterstellung kann das Deckelelement 16, das bezogen auf eine Fahrzeuglängsmittelebene beidseits jeweils in einer Führungsschiene 22 geführt ist, entsprechend der Darstellung in Fig. 2 über den festen Dachbereich 12 nach hinten in Richtung Fahrzeugheck verfahren werden.

Zur Anbindung an den Fahrzeugaufbau ist das Deckelelement 16 im Bereich seiner seitlichen Ränder jeweils mit einem Träger 24 verbunden, der sich im Wesentlichen in Fahrzeuglängsrichtung erstreckt und in Wirkverbindung mit einer in der betreffenden Führungsschiene 22 geführten, hier nicht näher beschriebenen Schiebedachmechanik steht.

Die Anbindung des Deckelelements 16 an die Träger 24 erfolgt jeweils über eine vordere Verschraubung 26, eine mittlere Verschraubung 28 und eine heckseitige Verschraubung 30. Die Achsen der Verschraubungen 26 und 28 erstrecken sich im Wesentlichen in Fahrzeugquerrichtung. Die Achse der heckseitigen Verschraubung 30 erstreckt sich im Wesentlichen in Fahrzeuglängsrichtung.

Zur Realisierung der Verschraubungen 30 weisen die jeweils als Stanzbiegeteil ausgebildeten Träger 24 an ihrer Heckseite jeweils eine Fixierlasche 32 auf, welche sich an einer Versteifungsrippe 34 abstützt und in die die jeweilige Verschraubung 30 eingreift. An dem Deckelelement 16 ist zu dessen Anbindung an die Träger 24 beidseits jeweils eine mit der Lasche 32 korrespondierende Lasche 36 ausgebildet, welche ebenfalls von der jeweiligen Verschraubung 30 durchgriffen ist.

Des Weiteren weist das Deckelelement 16 bezogen auf die Fahrzeuglängsmittelebene seitlich jeweils eine deckelfeste Blende 37 auf, mittels der ein Spalt, der im in Lüfterstellung ausgestellten Zustand des Deckelelements 16 zwischen der Unterseite des Deckelelements 16 und dem jeweiligen Dachseitenholm angeordnet ist, verblendet wird, so dass der betreffende Bereich der Schiebedachmechanik von außen nicht einsehbar ist.

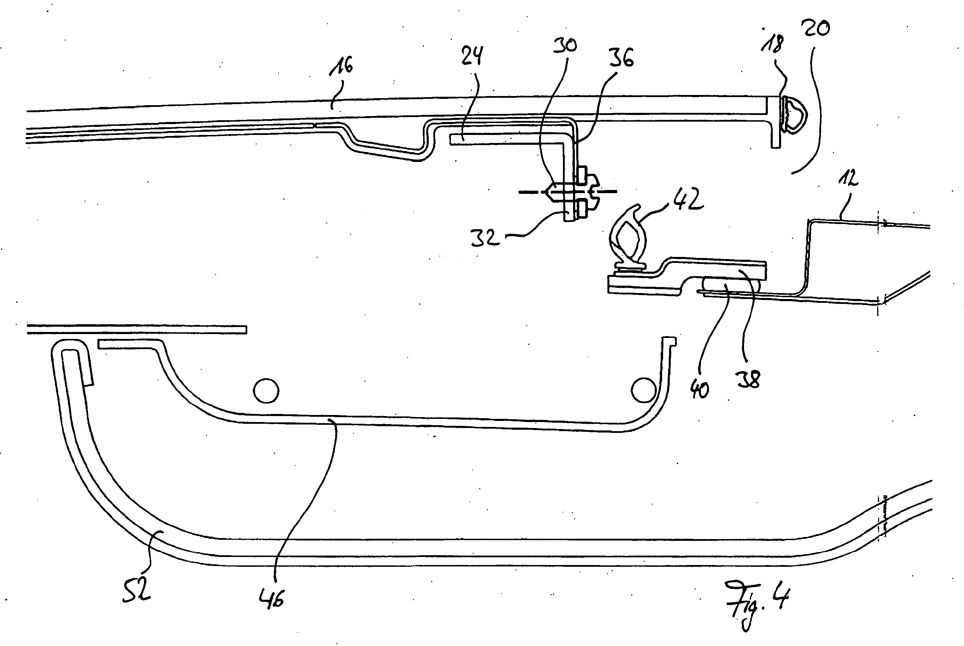

Des Weiteren weist das in der Zeichnung dargestellte Dachöffnungssystem einen Rahmen 38 auf, von dem in den Figuren 3 und 4 jeweils ein heckseitiger, sich in Fahrzeugquerrichtung erstreckender Schenkel dargestellt ist und der über eine Kleberaupe 40 mit dem Fahrzeugaufbau verbunden ist. Auf dem Rahmen 38 ist umlaufend ein als so genannte Topdichtung ausgebildetes Dichtprofil 42 aufgesetzt, auf der das Deckelelement 16 in Schließstellung aufliegt. Des Weiteren weist das Deckelelement 16 an seinem umlaufenden Rand ein weiteres umlaufendes Dichtprofil 44 auf, das in Schließstellung des Deckelelements an Seitenwänden der angrenzenden festen Dachabschnitte anliegt.

Das Dachöffnungssystem ist mit einem Querträger 46 versehen, der sich in Fahrzeugquerrichtung erstreckt und zur Fixierung bzw. Lagerung einer hier nicht näher dargestellten Rolloanordnung zur Verschattung der Dachöffnung 14 und für einen ebenfalls nicht näher dargestellten Elektroantrieb zur Betätigung des Schiebedachmechanik dient. Der Querträger 46 ist bezogen auf den heckseitigen festen Dachbereich 12 bugseitig und unterhalb der Ebene des Rahmens 38 angeordnet. In Schließstellung und in Lüfterstellung des Deckelelements 16 sind die Laschen 32 und 36, die sich jeweils in Fahrzeugquerrichtung erstrecken und über die das Deckelelement 16 an dem Träger 24 verschraubt ist, oberhalb des Querträgers 46 angeordnet.

Zwischen einem hinteren Rand 48 des Querträgers 46 und dem sich Fahrzeugquerrichtung erstreckenden, heckseitigen Schenkel des Rahmens 38 ist ein Spalt 50 ausgebildet, über den in Schließstellung des Deckelelements 16 die Verschraubung 30 mittels eines Schraubenziehers oder dergleichen zugänglich ist, so dass eine Einstellung des Deckelelements 16 gegenüber den festen Dachabschnitten möglich ist. Die Einstellung über den einen Einstellspalt darstellenden Spalt 15 erfolgt vor der Montage eines in Fig. 4 dargestellten Fahrzeuginnenhimmels 52, der den Querträger 46 an dessen Unterseite überdeckt.

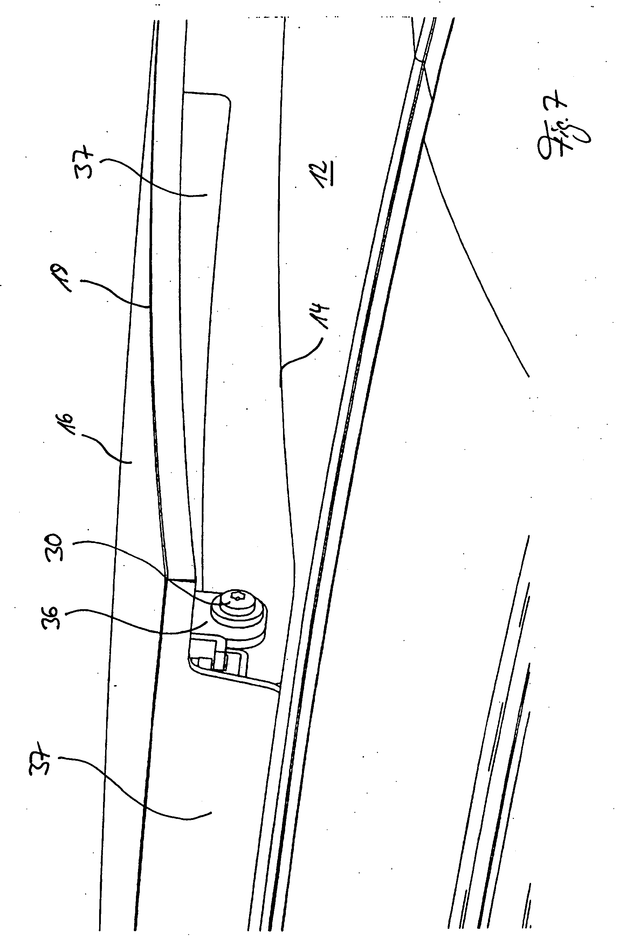

Die Ausbildung der Lasche 32 des Trägers 24 und der Lasche 36 des Deckelelements 16 und der in diesen eingebrachten Schraubenlöcher für die Verschraubung 30 ist des Weiteren so gewählt, dass die Verschraubung 30 in der in den Figuren 1, 4 und 7 dargestellten Lüfterstellung mittels eines Schraubenziehers oder dergleichen über den Spalt 20 zwischen dem heckseitigen Rand 18 des Deckelelements 16 und dem heckseitigen festen Dachabschnitt 12 zugänglich ist. Die Achse der Verschraubung 30 fluchtet mithin in Lüfterstellung des Deckelelements 16 mit dem Spalt 20 und in Schließstellung des Deckelelements mit dem Spalt 50.

Fig. 3 stellt die Einbausituation dar, bei der das als Modul ausgebildete Dachöffnungssystem von oben auf den Dachrahmen 54 aufgesetzt wird und bezüglich des festen Dachabschnitts 12 positioniert wird, und zwar durch eine Ausrichtung der Deckelhinterkante 18 gegenüber dem festen Dachabschnitt 12. Das Deckelelement 16 befindet sich hierbei in Schließstellung. Anschließend kann über die Verschraubungen 26, 28 und 30 eine Feinjustierung des Deckelelements 16 vorgenommen werden, wobei die heckseitige Verschraubung 30 über den Spalt 50 zugänglich ist. Die Verschraubungen 26 und 28 sind vom Fahrzeuginnenraum aus in Fahrzeugquerrichtung zugänglich. Anschließend wird der Fahrzeuginnenhimmel 52 montiert. Im Wartungsfall kann das Deckelelement 16 über den Spalt 20 in Lüfterstellung justiert und verschraubt werden. Die Verschraubungen 26 und 28 sind wiederum vom Fahrzeuginnenraum aus in Fahrzeugquerrichtung zugänglich.

Durch die Ausrichtung der Verschraubung 30 in Fahrzeuglängsrichtung ist es also trotz Ausbildung der Seitenblenden 37 möglich, das Deckelelement 16 nach der Montage des Dachöffnungssystems auf einem fahrzeugfesten Dachrahmen 54 durch Betätigung der Verschraubungen 30 von hinten, das heißt von der Heckseite des Deckelelements 16 aus, und der Verschraubungen 26 und 28 vom Fahrzeuginnenraum aus in Fahrzeugquerrichtung einzustellen.

### Bezugszeichen

- 10: Dach
- 12: fester Dachbereich
- 14: Dachöffnung
- 16: Deckelelement
- 18: hinterer Rand
- 20: Spalt
- 22: Führungsschiene
- 24: Träger
- 26: Verschraubung
- 28: Verschraubung
- 30: Verschraubung
- 32: Fixierlasche
- 34: Versteifungsrippe
- 36: Lasche
- 38: Rahmen
- 40: Kleberaupe
- 42: Dichtprofil
- 44: Dichtprofil
- 46: Querträger
- 48: hinterer Rand
- 50: Spalt
- 52: Fahrzeuginnenhimmel
- 54: Dachrahmen

## Patentansprüche

1. Öffnungsfähiges Fahrzeugdach, umfassend ein Dachöffnungssystem mit einem in seitlichen Führungsschienen (22) geführten Deckelelement (16), mittels dessen eine Dachöffnung (14) wahlweise verschließbar oder zumindest teilweise freigebbar ist, das zwischen einer eingeschwenkten Schließstellung und einer ausgeschwenkten Lüfterstellung verschwenkbar ist, in der ein hinterer Rand des Deckelelements (16) gegenüber einem festen Dachbereich (12) nach oben ausgestellt ist, und das zur Freigabe der Dachöffnung über den heckseitig der Dachöffnung angeordneten festen Dachbereich (12) verfahrbar ist, wobei das Deckelelement (16) bezogen auf eine Fahrzeuglängsmittelebene beidseits jeweils über mindestens eine vordere (26) und eine hintere (30) Schraubverbindung an einem sich im Wesentlichen in Fahrzeuglängsrichtung erstreckenden Träger (24) fixiert ist, der an eine Dachmechanik angebunden ist, **dadurch gekennzeichnet, dass** die hinteren Schraubverbindungen (30) der Träger (24) jeweils im Wesentlichen in Fahrzeuglängsrichtung und die vorderen Schraubverbindungen (26) der Träger (24) jeweils im Wesentlichen in Fahrzeugquerrichtung ausgerichtet sind.

2. Öffnungsfähiges Fahrzeugdach nach Anspruch 1, **dadurch gekennzeichnet, dass** die Träger (24) an ihren heckseitigen Enden jeweils eine Fixierlasche (32) aufweisen, bezüglich deren Ebene die jeweilige hintere Verschraubung (30) lotrecht ausgerichtet ist und in die die jeweilige hintere Verschraubung (30) eingreift.

3. Öffnungsfähiges Fahrzeugdach nach Anspruch 2, **dadurch gekennzeichnet, dass** die Träger (24) jeweils eine Versteifungsrippe (34) aufweisen, an der sich die jeweilige Fixierlasche (32) abstützt.

4. Öffnungsfähiges Fahrzeugdach nach einem der Ansprüche 1 bis 3, **dadurch gekennzeichnet, dass** die Achsen der hinteren Verschraubungen (30) so angeordnet sind, dass sie in Lüfterstellung des Deckelelements (16) mit einem Spalt (20) zwischen einem vorderen Rand des festen Dachabschnitts (12) und dem hinteren Rand des Deckelelements (16) fluchten und in Schließstellung des Deckelelements (16) mit einem Einstellspalt (50) zwischen einem heckseitigen Schiebedachrahmenschenkel (38) und einem Querträger (46) zur Aufnahme von Dachfunktionselementen fluchten, der in Schließstellung oder Lüfterstellung des Deckelelements von diesem zumindest weitgehend überdeckt ist.

5. Öffnungsfähiges Fahrzeugdach nach einem der Ansprüche 1 bis 4, **dadurch gekennzeichnet, dass** das Deckelelement (16) bezüglich einer Fahrzeuglängsmittelebene an ihren seitlichen Rändern beidseits jeweils eine deckelfeste Seitenblende (37) aufweist.
